# EUROPÄISCHE PATENTSCHRIFT

(11) **EP 0 374 389 B1**
(45) Veröffentlichungstag und Bekanntmachung des Hinweises auf die Patenterteilung: **09.08.1995**
(21) Anmeldenummer: 89118290.9
(22) Anmeldetag: 03.10.1989
(51) Int. Cl.: C21D 9/30

(54) **Verfahren zur Vorbehandlung von Bauteilen einer gebauten Nockenwelle**
Process for the pretreatment of parts for a composite camshaft
Procédé de traitement préalable de pièces pour un arbre à cames composé

(30) Priorität: 17.12.1988 DE 3842593
(43) Veröffentlichungstag der Anmeldung: 27.06.1990
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE); Grewe, Heribert, D-5063 Overath (DE)
(74) Vertreter: Manderla, Thomas, Dr.

(56) Entgegenhaltungen:
- EP-A- 0 265 663
- EP-A- 0 292 795
- GB-A- 2 152 858

## Beschreibung

Die Erfindung betrifft ein Verfahren zur Vorbehandlung von Bauteilen für eine gebaute Nockenwelle, bei deren Herstellung Antriebselemente auf einem Rohr durch plastisches Aufweiten einzelner Rohrabschnitte unter Überschreiten der Elastizitätsgrenze des Rohrwerkstoffes kraftschlüssig festgelegt werden.

Bei der Herstellung von aufgebauten Wellen, insbesondere Nockenwellen der eingangs genannten Art, ist es als besonderer Vorteil angesehen worden, daß die verwendeten Antriebselemente, nämlich Nocken und Antriebselemente, sowie Lagerhülsen und gegebenenfalls Kurbelwangen vor dem hydraulischen Verbinden fertig bearbeitet sein können und nach dem Herstellen der Verbindung das fertige Bauteil zur Verfügung steht. Das verwendete Rohrmaterial ist jeweils in Abhängigkeit von den erforderlichen unterschiedlichen Werkstoffeigenschaften verschiedener Antriebselemente auszuwählen. Das Verhältnis der Streckgrenzen ist hierbei zu beachten, damit ein Überschreiten der Elastizitätsgrenze im Rohrwerkstoff beim Aufweiten erfolgt, während die Umformung im Material der Antriebselemente rein elastisch bleibt, da der erforderliche Kraftschluß anders nicht zu erzeugen ist. Dies beschränkt die Auswahl der Werkstoffe, insbesondere bei Verwendung von Gußnocken, die bei übermäßiger elastischer Verformung durch das aufgeweitete Rohr reißen können. Weiterhin erfordern die hierdurch vorgegebenen Werkstoffe für das Rohrmaterial das Aufziehen gesonderter Lagerringe, da die Laufeigenschaften der unbehandelten Rohrwerkstoffe manchmal nicht ausreichend sind. Schließlich ist festzustellen, daß die hochbelasteten Verbindungen zur Festlegung von Antriebsritzeln nicht immer den Anforderungen genügen.

Ein Verfahren zur Herstellung einer gebauten Nockenwelle ist aus der EP-A-0 292 795 bekannt. Bei diesem Verfahren werden Antriebselemente, insbesondere Nocken auf einer Hohlwelle in der Weise befestigt, daß bestimmte Rohrabschnitte unter Überschreiten der Elastizitätsgrenze des Rohrwerkstoffes plastisch aufgeweitet werden. Die den aufzuweitenden Rohrabschnitten gegenüberliegenden Bereiche der Nocken werden dabei elastisch verformt. Um nun auch Nocken aus sprödem, z.B. gehärtetem Material mit geringer Dehnbarkeit auf der Hohlwelle festlegen zu können, bestehen die Nocken aus Abschnitten mit geringer und aus Abschnitten mit hoher Dehnbarkeit. Dieses Verfahren hat den Nachteil, daß entweder der Nocken als Doppelnocken mit einem die beiden Nocken verbindenden Abschnitt hoher Dehnbarkeit ausgebildet sein muß oder für die Verbindung eine gesondert hergestellte Stahlhülse erforderlich ist. Aus Platzgründen und von der Motorenkonfiguration her ist in vielen Fällen ein Doppelnocken aber nicht unterzubringen. Die gesondert hergestellte Stahlhülse hat den Nachteil, daß der Nocken mit der Stahlhülse zunächst verbunden werden muß und die Stahlhülse in jedem Fall radial und je nach Ausbildung auch noch axial Platz beansprucht, der in vielen Fällen nicht zur Verfügung steht. Insbesondere der radiale Platzbedarf ist als kritisch anzusehen, da bei feststehenden Außenmaßen für den Nocken die Durchgangsbohrung hinsichtlich der verbleiben Wand nicht zu groß und andererseits die Hohlwelle im Durchmesser im Hinblick auf den erforderlichen Aufweitdruck und die Stabilität nicht zu klein gewählt werden darf.

Aus der EP-A-0 265 663 ist ebenfalls ein Verfahren zur Herstellung einer gebauten Nockenwelle bekannt. Bei diesem Verfahren werden zur Festlegung von Antriebselementen wie Nocken, Lagerringen, Zahn- oder Kegelräder auf einem Wellenrohr, Abschnitte des Wellenrohres, die im Bereich der zu befestigenden Elemente liegen, durch innere Druckbeaufschlagung aufgeweitet. Dabei wird das Material des einem aufgeschobenen Element zugeordneten Längsabschnittes des Wellenrohres beim Aufweiten insgesamt einer plastischen Verformung unterzogen, während das Material des jeweiligen Elementes in der Randschicht den Zustand einer überwiegend elastischen Verformung annimmt. In Ausgestaltung dieses Vorschlages werden Daten für den Spalt sowie für das Verhältnis der Wanddicke zwischen Wellenrohr und aufgeschobenem Element angegeben. Außerdem gibt es Angaben für die Länge des aufzuweitenden Abschnittes im Verhältnis zur axialen Länge des aufgeschobenen Elementes. Um aus Kostengründen relativ weiche Wellenwerkstoffe auswählen zu können, wird außerdem vorschlagen, daß das Material des Wellenrohres eine um 25 bis 35 % geringere Zugfestigkeit gegenüber dem Material der Elemente aufweisen soll.

Aufgabe der Erfindung ist es, ein verbessertes gattungsgemäßes Verfahren zur Herstellung einer gebauten Nockenwelle anzugeben,
deren Antriebselemente durch Aufweiten einzelner Rohrabschnitte auf dem Rohr festgelegt werden, und die Werkstoffeigenschaften in den verschiedenen axialen Abschnitten des Rohres an die verschiedenen Erfordernisse anzupassen.

Diese Aufgabe wird durch ein Verfahren gemäß Anspruch 1 gelöst. Danach wird zur Herstellung einer gebauten Nockenwelle ein Rohrmaterial mit Lagereigenschaften verwendet, d. h. ein Material, das zum plastischen Aufweiten eine ungünstig hohe Streckgrenze hat. Eiin solches Rohr wird als Vorbehandlung vor der eigentlichen Herstellung der Nockenwelle örtlich weichgeglüht, und zwar an den Stellen, an denen Antriebselemente festgelegt werden sollen.

Eine weitere Lösung besteht in einem Verfahren gemäß Anspruch 3. Danach wird ein Rohr verwendet, das genügend "weich" ist, um durch das beabsichtigte hydraulische Aufweitungsverfahren an den Stellen der Antriebselemente aufgeweitet zu werden. Bereiche an dem Rohr, die zwischen den Antriebselementen liegen, sollten jedoch Lagereigenschaften haben, damit sich zusätzliche Maßnahmen zur Lagerung der Welle erübrigen. Gemaß dem Verfahren werden hierfür vorgesehene Bereiche randschichtgehärtet. Die GB 2 152 858 erwähnt zwar ebenfalls ein Randschichthärten einer gebauten Nockenwelle, jedoch soll dies erst nach einem Verformungsschritt ausgeführt werden.

Eine weitere Lösung besteht in einem Verfahren gemäß Anspruch 6. Danach wird das besondere Problem des Anfügens eines Antriebsritzels an die Nockenwelle gelöst. Dabei wird ein Endbereich des Nockenwellenrohres vergütet, so daß eine in diesen Randbereich eingefügte Hülse durch hydraulisches Aufweiten festgelegt werden kann.

Weitere Anwandlungen der vorgenannten Erfindung ergeben sich für den Fachmann im Rahmen des hier Beschriebenen.

Bevorzugte Ausführungsbeispiele der Erfindung sind in den Zeichnungen dargestellt. Hierin zeigt
- Fig. 1: ein Rohr mit einem eingesteckten Antriebsritzel,
- Fig. 2: ein Rohr mit einem aufgeschobenen Antriebsritzel,
- Fig. 3: ein Rohr mit einem eingezogenen Endbereich.

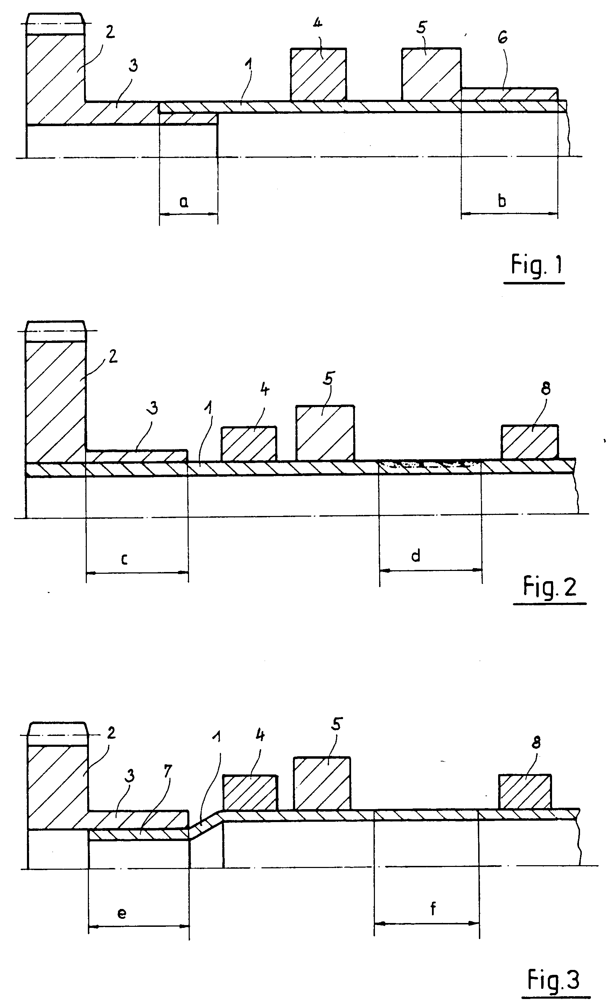

In Fig. 1 ist ein Rohrkörper 1 darstellt, an dessen einen, Ende ein Antriebsritzel 2 mit einer daran anschließenden einstückigen Hülse 3 in das Rohrende eingeführt ist. Ein erstes Antriebselement 4 und ein zweites Antriebselement 5 sind auf das Rohr aufgeschoben, wobei letzteres eine einstückig angesetzte Hülse 6 aufweist, die als Lagerstelle dienen kann. Der Bereich a der Hülse 3 kann weichgeglüht sein, während der entsprechende Bereich des Rohrkörpers 1 vergütet ist.

In Fig. 2 ist ein Rohrkörper 1 gezeigt, auf dessen Ende ein Antriebsritzel 2 aufgeschoben ist, das mit einer einstückig angesetzten Hülse 3 verbunden ist. Weiterhin sind Antriebselemente 4, 5 und 8 erkennbar. Die Hülse 3, deren Material vergütet sein kann, kann einen Lagerbereich c bilden.

Als Material für den Rohrkörper 1 kann C35 oder ein ähnlicher Werkstoff verwendet werden. Das Material des Rohrkörpers 1 wird am Rohrendenabschnitt auf über 600 N/mm² vergütet. Die mit dem Antriebsritzel 2 integral verbundene axial angesetzte, auf den Rohrendenabschnitt aufgeschobene und durch Aufweiten unter Überschreiten der Elastizitätsgrenze kraftschlüssig auf dem Rohrendenabschnitt festgelegte Hülse wird vor ihrem Festlegen, vorzugsweise durch induktives Erwärmen, im Einsteckbereich weichgeglüht.

In Fig. 3 ist wiederum ein Rohrkörper 1 dargestellt, der in diesem Fall am Rohrende mit einem Antriebsritzel 2 versehen ist, das eine einstückig angesetzte Hülse 3 aufweist, die auf das reduzierte Rohrende 7 aufgeschoben ist. Weiterhin sind Antriebselemente 4 und 5 und ein Antriebselement 8 auf dem Rohr 1 festgelegt. Am Rohr ist der reduzierte Bereich zur Befestigung der Hülse und ggfs. weitere Bereiche zur Befestigung der Antriebselemente weichgeglüht. Der Bereich f des Rohres kann ohne weitere Behandlung als Lagerstelle Verwendung finden.

### Bezugszeichenliste

- 1: Rohrkörper
- 2: Antriebsritzel
- 3: Hülse
- 4: Antriebselement
- 5: Antriebselement
- 6: Hülse
- 7: Rohrende
- 8: Antriebselement

## Patentansprüche

1. Verfahren zur Vorbehandlung von Bauteilen einer gebauten Nockenwelle, bei deren Herstellung Antriebselemente (2, 3; 4, 5, 8) auf einem Rohr (1) durch plastisches Aufweiten einzelner Rohrabschnitte unter Überschreiten der Elastizitätsgrenze des Rohrwerkstoffes kraftschlüssig festgelegt werden,
**dadurch gekennzeichnet,** daß
zur Festlegung der Antriebselemente (2, 3; 4, 5, 8) unter Verwendung von Rohrmaterial mit Lagereigenschaften und mit zum plastischen Aufweiten in Bezug auf die Antriebselemente (2, 3; 4, 5, 8) ungünstig hoher Streckgrenze das Rohrmaterial vor dem Aufbringen der Antriebselemente (2, 3; 4, 5, 8) und vor dem Aufweiten örtlich weichgeglüht wird.

2. Verfahren nach Anspruch 1, dadurch gekennzeichnet, daß bei Antriebslementen (2) aus Stahl mit axial angesetzter Hülse zum Aufschieben und Festlegen auf dem Rohr, insbesondere Nocken (4, 5, 8) oder Antriebsritzel (2), die angesetzte Hülse vergütet wird.

3. Verfahren zur Vorbehandlung von Bauteilen für eine gebaute Nockenwelle, bei deren Herstellung Antriebselemente (2, 3; 4, 5, 8) auf einem Rohr (1) durch plastisches Aufweiten einzelner Rohrabschnitte unter Überschreiten der Elastizitätsgrenze des Rohrwerkstoffes kraftschlüssig festgelegt werden,
**dadurch gekennzeichnet**, daß
unter Verwendung von Rohrmaterial mit zum plastischen Aufweiten in Bezug auf die Antriebselemente (2, 3; 4, 5, 8) geeigneter, geringer Streckgrenze als Lagerstellen vorgesehene Rohrabschnitte (d) zur Herstellung von Lagereigenschaften randschichtgehärtet werden.

4. Verfahren nach Anspruch 3, dadurch gekennzeichnet, daß die Lagerstellen (d) thermisch, z.B. durch Induktivverfahren, randschichtgehärtet werden.

5. Verfahren nach Anspruch 3, dadurch gekennzeichnet, daß die Lagerstellen (d) mechanisch, z.B. durch Walzen oder Kugelstrahlen, randschichtgehärtet werden.

6. Verfahren zur Vorbehandlung von Bauteilen für eine gebaute Nockenwelle, bei deren Herstellung Antriebselemente (4, 5) auf einem Rohr (1) durch plastisches Aufweiten einzelner Rohrabschnitte unter Überschreiten der Elastizitätsgrenze des Rohrwerkstoffes kraftschlüssig festgelegt werden,
**dadurch gekennzeichnet,** daß
zur Festlegung eines Antriebsritzels (2) an einem Rohrende unter Verwendung von Rohrmaterial mit zum plastischen Aufweiten geeigneter, in Bezug auf die Antriebselemente (4, 5) geringer Streckgrenze der Rohrendabschnitt zum Einstecken einer mit dem Antriebsritzel (2) verbundenen, aufzuweitenden Hülse (3) auf eine erhöhte Zugfestigkeit vergütet wird.

7. Verfahren nach Anspruch 6, dadurch gekennzeichnet, daß das Material an einem Rohrende auf über 600 N/mm² Zugfestigkeit vergütet wird.

8. Verfahren nach Anspruch 6, dadurch gekennzeichnet, daß ein Antriebsritzel (2) aus Stahl mit axial angesetzter Hülse (3) zum Einstecken und Festlegen in einem Rohrende im Einsteckbereich weichgeglüht wird, insbesondere durch induktives Erwärmen.

9. Verfahren nach einem der Ansprüche 3 bis 8, dadurch gekennzeichnet, daß C 35 oder ein ähnlicher Werkstoff als Rohrmaterial verwendet wird.

10. Verfahren nach einem der Ansprüche 3 bis 9, dadurch gekennzeichnet, daß C 35 oder ein ählicher Werkstoff für die Antriebselemente (2, 3; 4, 5, 6, 8) verwendet wird.

## Claims

1. Process for the pretreatment of component parts of a built-up camshaft in the construction of which driving elements (2, 3; 4, 5, 8) are force-locked on a tube (1) by plastic expansion of individual portions of the tube exceeding the elastic limit of the tube material, characterized in that for the purpose of fastening the driving elements (2, 3; 4, 5, 8), when use is made of tube material having bearing properties and an unfavourably high yield point for plastic expansion, relative to the driving elements (2, 3; 4, 5, 8), the tube material is locally soft annealed before the driving elements (2, 3; 4, 5, 8) are fitted and before the expansion.

2. Process according to Claim 1, characterized in that in the case of steel driving elements (2) having an axially attached sleeve for mounting and fastening on the tube, particularly cams (4, 5, 8) or driving pinions (2), the attached sleeve is tempered.

3. Process for the pretreatment of component parts for a built-up camshaft in the production of which driving elements (2, 3; 4, 5, 8) are force-locked on a tube (1) by plastic expansion of individual portions of the tube exceeding the elastic limit of the tube material, characterized in that, when use is made of tube material having a low yield point suitable for plastic expansion, relative to the driving elements (2, 3; 4, 5, 8), tube portions (d) provided as bearing areas are subjected to surface layer hardening to produce bearing properties.

4. Process according to Claim 3, characterized in that the bearing areas (d) are subjected to thermal surface layer hardening, for example by an induction process.

5. Process according to Claim 3, characterized in that the bearing areas (d) are subjected to mechanical surface layer hardening, for example by rolling or shot blasting.

6. Process for the pretreatment of component parts for a built-up camshaft in the production of which driving elements (4, 5) are force-locked on a tube (1) by plastic expansion of individual portions of the tube exceeding the elastic limit of the tube material, characterized in that for the purpose of fastening a driving pinion (2) on a tube end, when use is made of tube material having a low yield point suitable for plastic expansion, relative to the driving elements (4, 5), the end portion of the tube is tempered to a raised tensile strength for the purpose of inserting a sleeve (3) which is joined to the driving pinion (2) and is to be expanded.

7. Process according to Claim 6, characterized in that the material at one end of the tube is tempered to a tensile strength higher than 600 N/mm².

8. Process according to Claim 6, characterized in that a steel driving pinion (2) having an axially attached sleeve (3) for insertion into and fastening in an end of the tube is soft annealed in the insertion region, particularly by induction heating.

9. Process according to one of Claims 3 to 8, characterized in that the material used for the tube is C 35 or a similar material.

10. Process according to one of Claims 3 to 9, characterized in that C 35 or a similar material is used for the driving elements (2, 3; 4, 5, 6, 8).

## Revendications

1. Procédé de prétraitement de composants d'un arbre à cames assemblé lors de la fabrication duquel des éléments d'entraînement (2, 3 ; 4, 5, 8) sont fixés à force sur un tube (1) par étirage plastique de sections individuelles de tube en dépassant la limite d'élasticité du matériau du tube,
caractérisé en ce que,
pour la fixation des éléments d'entraînement (2, 3 ; 4, 5, 8) en utilisant un matériau de tube à propriétés d'appui et avec une limite d'étirage par rapport aux éléments d'entraînement (2, 3 ; 4, 5, 8) défavorablement élevée pour l'étirage plastique, le matériau de tube est recuit localement avant le montage des éléments d'entraînement (2, 3 ; 4, 5, 8) et avant l'étirage.

2. Procédé selon la revendication 1,
caractérisé en ce que, dans le cas d'éléments d'entraînement (2) en acier avec douille raboutée axialement pour le coulissement et la fixation sur le tube, en particulier de cames (4, 5, 8) ou de pignons d'entraînement (2), la douille raboutée est soumise à un traitement de trempe et revenu.

3. Procédé de prétraitement de composants pour un arbre à cames assemblé lors de la fabrication duquel des éléments d'entraînement (2, 3 ; 4, 5, 8) sont fixés à force sur un tube (1) par étirage plastique de sections individuelles de tube en dépassant la limite d'élasticité du matériau du tube,
caractérisé en ce que,
en utilisant un matériau de tube avec une limite d'étirage par rapport aux éléments d'entraînement (2, 3 ; 4, 5, 8) plus faible convenant à l'étirage plastique, des sections de tube (d) prévues comme points d'appui sont trempées en couche superficielle pour la création de propriétés d'appui.

4. Procédé selon la revendication 3,
caractérisé en ce que les points d'appui (d) sont trempés en couche superficielle thermiquement, par exemple par un processus inductif.

5. Procédé selon la revendication 3,
caractérisé en ce que les points d'appui (d) sont trempés en couche superficielle mécaniquement, par exemple par laminage ou par grenaillage.

6. Procédé de prétraitement de composants pour un arbre à cames assemblé lors de la fabrication duquel des éléments d'entraînement (4, 5) sont fixés à force sur un tube (1) par étirage plastique de sections individuelles de tube en dépassant la limite d'élasticité du matériau du tube,
caractérisé en ce que,
pour la fixation d'un pignon d'entraînement (2) à une extrémité de tube en utilisant un matériau de tube avec une limite d'étirage par rapport aux éléments d'entraînement (4, 5) plus faible convenant à l'étirage plastique, la section d'extrémité de tube, pour l'enfoncement d'une douille (3) à étirer, reliée au pignon d'entraînement (2), est soumise à un traitement de trempe et revenu à une résistance à la traction accrue.

7. Procédé selon la revendication 6,
caractérisé en ce que le matériau est soumis à un traitement de trempe et revenu à une extrémité de tube à une résistance à la traction supérieure à 600 N/mm².

8. Procédé selon la revendication 6,
caractérisé en ce qu'un pignon d'entraînement (2) en acier avec douille (3) raboutée axialement est recuit, en particulier par chauffage inductif, dans la zone d'enfoncement pour un enfoncement et une fixation dans une extrémité de tube.

9. Procédé selon l'une des revendications 3 à 8,
caractérisé en ce que du C 35 ou une matière première analogue est utilisé comme matériau de tube.

10. Procédé selon l'une des revendications 3 à 9,
caractérisé en ce que du C 35 ou une matière première analogue est utilisée pour les éléments d'entraînement (2, 3 ; 4, 5, 6, 8).
